# EUROPÄISCHE PATENTSCHRIFT

(11) **EP 0 588 045 B1**
(45) Veröffentlichungstag und Bekanntmachung des Hinweises auf die Patenterteilung: **06.05.1998**
(21) Anmeldenummer: 93112619.7
(22) Anmeldetag: 06.08.1993
(51) Int. Cl.: G08G 1/01, G07B 15/00, G01S 13/82, H01Q 3/26

(54) **Verfahren zur Datenübertragung zwischen einer Feststation und sich bewegenden Objekten**
Method of exchanging data between a fixed station and moving objects
Procédé pour échanger des données entre une station fixe et des objets en mouvement

(30) Priorität: 28.08.1992 DE 4228658
(43) Veröffentlichungstag der Anmeldung: 23.03.1994
(73) Patentinhaber: ROBERT BOSCH GMBH, 70442 Stuttgart (DE)
(72) Erfinder: Göckler, Heinz, Dr. Ing., D-71522 Backnang (DE); Gebauer, Thomas, Dipl.-Ing., D-71546 Aspach (DE)

(56) Entgegenhaltungen:
- EP-A- 0 407 243
- WO-A-92/15978

## Beschreibung

Die vorliegende Erfindung betrifft ein Verfahren zur Datenübertragung zwischen einer Feststation und in einem begrenzten Gebiet sich bewegenden Objekten, wobei die Feststation mindestens eine Antennenanordnung aufweist, welche für jedes der Objekte, mit dem eine Datenübertragung stattfinden soll, ein eigenes Richtdiagramm erzeugt.

Ein solches Verfahren ist aus der älteren deutschen Patentanmeldung P 41 07 803 bekannt. Als eine Anwendungsmöglichkeit der darin beschriebenen Abfrageanordnung ist die automatische Zahlung von Mautgebühren aufgeführt. Jedes Fahrzeug, das eine Mautgebühr zu zahlen hat, ist mit einer automatischen Abbuchungseinrichtung ausgestattet, welche eine Sende-/Empfangsvorrichtung besitzt. Diese Sende-/Empfangsvorrichtung wird von einer an der Mautstelle fest installierten Sende-/Empfangseinrichtung aktiviert und ein Dialog zwischen beiden aufgenommen. Dabei verbucht zunächst die Abbuchungseinrichtung die Mautgebühr und sendet anschließend eine Quittung darüber an die Sende-/Empfangseinrichtung der Mautstelle. Während dieses Vorgangs wird für jedes der Fahrzeuge von einer Antennenanordnung, bestehend aus mehreren einzelnen Antennenelementen, ein Richtdiagramm erzeugt. Dazu sind entweder gemäß einer ersten Lösung Antennen vorgesehen, deren Richtdiagramme auf vorgegebene Ausleuchtegebiete fixiert sind. Es muß in diesem Fall also für jede Fahrspur oder jedes Segment einer Fahrspur, in dem ein Fahrzeug fährt, eine Antennen vorhanden sein. Besteht das zu erfassende Gebiet aus vielen Fahrspuren, so ist eine sehr aufwendige, aus vielen Antennen bestehende Anordnung erforderlich. In einer zweiten Lösung besteht die Antennenanordnung aus mehreren phasengesteuerten Einzelantennen, welche in der Lage sind, den sich bewegenden Fahrzeugen die Richtdiagramme nachzuführen. Allerdings werden dazu Informationen über den Ort der einzelnen Fahrzeuge benötigt. Diese Ortsinformationen liefern gemäß der P 41 07 803 in die Straße eingelassene Induktionsschleifen. Die Gewinnung der Ortsinformationen wird dadurch recht aufwendig.

Der Erfindung liegt nun die Aufgabe zugrunde, ein Verfahren der eingangs genannten Art anzugeben, mit dem bei möglichst geringem Aufwand an technischen Mitteln aus einer Vielzahl von sich in einem vorgegebenen Gebiet bewegenden Objekten mit jedem einzelnen ein Datenaustausch durchgeführt werden kann.

Erfindungsgemäß wird diese Aufgabe durch die Merkmale der Ansprüche 1 und 2 gelöst. Vorteilhafte Weiterbildungen und Anwendungen der Erfindung gehen aus den Unteransprüchen hervor.

Das Verfahren der Erfindung benötigt gegenüber dem Stand der Technik weniger Antennenelemente und kommt ohne Induktionsschleifen aus, um die einzelnen Objekte richtig orten und mit ihnen Daten austauschen zu können.

Anhand eines in der Zeichnung dargestellten Ausführungsbeispiels wird nachfolgend die Erfindung näher erläutert.

Figur 1 zeigt einen Straßenabschnitt, innerhalb dessen eine Mauterfassung von Fahrzeugen stattfindet, und
Figur 2 zeigt ein Prinzipschaltbild einer Antennenanordnung mit einem Strahlformungsnetzwerk.

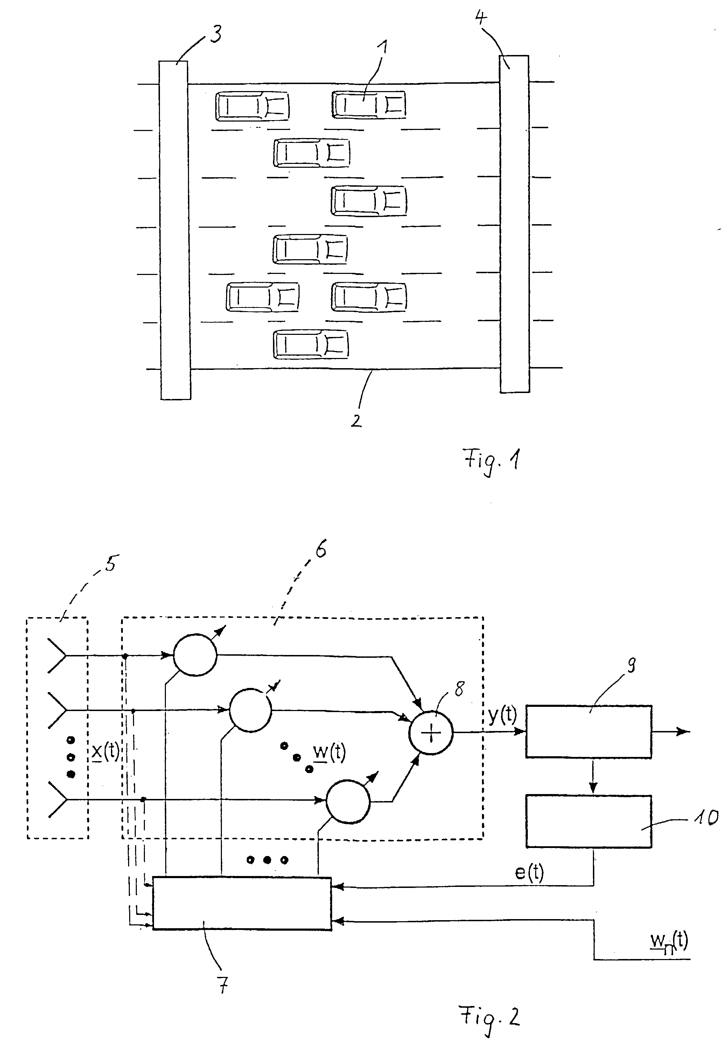

Das im folgenden beschriebene Verfahren dient dazu, zwischen Objekten, die sich innerhalb eines vorgegebenen Gebietes bewegen, und einer Feststation eine Datenübertragung zu ermöglichen. Diese sich bewegenden Objekte können, wie der Figur 1 zu entnehmen ist, z.B. Fahrzeuge 1 und das vorgegebene Gebiet 2 ein Abschnitt einer Straße sein. Innerhalb dieses Gebietes 2 soll es möglich sein, jedes einzelne sich darin befindende Fahrzeug 1 zu lokalisieren und von ihm ausgesendete Daten aufzunehmen, auch wenn die Fahrzeuge auf mehreren Spuren beliebig verteilt sein können.

Jedes Fahrzeug 1 ist mit einer von außen sichtbaren, vorzugsweise an der Windschutzscheibe angeordneten Einrichtung ausgestattet, die einen Empfänger, einen Sender und einen Prozessor besitzt, der beispielsweise von einer einen Geldbetrag speicherbaren Scheckkarte eine geforderte Mautgebühr abbucht.

Bevor die Fahrzeuge in das Gebiet 2 eintreten, werden ihre Mautgebührabbuchungseinrichtungen von einem Mikrowellensignal "aufgeweckt", das eine vor dem Gebiet 2 installierte Bake 3 oder eine am Ausgang des Gebiets 2 eingerichtete Feststation 4 an alle Fahrzeuge 1 aussendet.

Nun wird in dem Gebiet 2 jedes Fahrzeug 1 einer Kontrolle darüber unterzogen, ob es die vorgeschriebene Mautgebühr abgebucht hat. Dazu sendet die Feststation 4 ein Mikrowellensignal aus, das die Sender der Mautgebühr-Abbuchungseinrichtungen an den Fahrzeugen aktiviert, so daß diese in der Lage sind, ein Quittungssignal abzusenden. Die Feststation 4 lokalisiert jedes einzelne Fahrzeug in dem Gebiet 2 und überprüft, ob es ein Quittungssignal aussendet. Ist das nicht der Fall, so kann z.B. durch Fotographieren des Fahrzeugs dessen Kennzeichen festgehalten und damit der Fahrzeughalter ermittelt werden, so daß von diesem später die Mautgebühr eingezogen werden kann.

Die Datenübertragung zwischen den Fahrzeugen 1 und der Feststation 4 erfolgt im Halbduplex; d.h. es werden im Wechsel Daten von der Feststation zu den Fahrzeugen 1 (Downlink) und in umgekehrter Richtung (Uplink) übertragen. Eine für den Downlink zuständige Antennenanordnung der Feststation 4 sendet in einem einzigen das gesamte Gebiet 2 abdeckenden Strahlungsdiagramm Informationen (z.B. über den zu zahlenden Betrag) an alle dort befindlichen Fahrzeuge, wobei jedem Fahrzeug seine Information mittels einer Kennung zugeordnet wird.

Die Downlink-Übertragung der Informationen kann entweder sequentiell oder parallel erfolgen. Für die Uplink-Übertragung, bei dem jedes einzelne Fahrzeug 1 seine Quittung über den abgebuchten Gebührenbetrag an die Feststation 4 aussendet, ist diese mit mindestens einer Antennenanordnung 5 ausgestattet, welche in der Lage ist, die von den einzelnen Fahrzeugen räumlich voneinander getrennt ausgesendeten Daten zu empfangen und zu separieren. Eine solche Antennenanordnung 5 besteht, wie Figur. 2 verdeutlicht, aus mehreren einzelnen Antennenelementen, deren Ausgangssignale im Empfangsfall von mindestens einem Strahlformungsnetzwerk 6 so gewichtbar sind, daß die Antennenanordnung auf jedes Fahrzeug für die Datenübertragung von ihm zu der Feststation eine eigene Hauptempfangskeule richtet. Es kann entweder für jede Fahrspur eine eigene Antennenanordnung 5 vorgesehen werden, oder es werden mehrere Fahrspuren von einer Antennenanordnung 5 erfaßt.

Es ist vorteilhaft, solche Antennenelemente zu verwenden, die zirkular polarisierte Signale empfangen, weil diese bzgl. einfach und auch mehrfach reflektierten Signalen (z.B. Reflexion an der Straße, am eigenen Fahrzeug oder Nachbarfahrzeugen) weniger störanfällig sind. Eine ebenfalls zu einer geringeren Störanfälligkeit führende erhöhte Richtwirkung der einzelnen den Fahrzeugen zugeordneten Richtdiagramme wird dadurch erreicht, daß jedes Richtdiagramm von mehreren zu einer Strahlergruppe zusammengeschalteten Antennenelemente erzeugt wird. Jede Strahlergruppe liefert dann ein Empfangssignal.

Damit die Feststation mit jedem einzelnen Fahrzeug 1 einen Datenaustausch vornehmen kann, ist zunächst eine Ortung der einzelnen Fahrzeuge durchzuführen. Dazu empfängt die Antennenanordnung von allen Fahrzeugen, die sich in dem von der Antennenanordnung 5 erfaßten Gebiet befinden, Signale. Ein Prozessor 7 leitet aus den Empfangssignalen x(t) der einzelnen Antennenelemente Informationen über den augenblicklichen Ort der einzelnen Fahrzeuge ab. Mit diesen Ortsinformationen werden nun in dem zu jeder Antennenanordnung gehörenden Strahlformungsnetzwerk 6 die Signale der einzelnen Antennenelemente so gewichtet, d.h. es wird die Signalphase- und/oder -amplitude eines jeden Antennenelementes so eingestellt, daß die Antennenanordnung für jedes Fahrzeug ein solches Richtdiagramm erzeugt, daß eine Hauptempfangskeule auf das betreffende Fahrzeuge gerichtet ist und daß das Richtdiagramm in Richtung der jeweils anderen, potentiell störenden Fahrzeuge eine möglichst hohe Empfangsdämpfung gegenüber der Hauptempfangskeule (im Idealfall Nullstellen) aufweist. Die für jedes Antennenelement einzustellende Phase und Amplitude eines jeden Richtdiagramms werden im folgenden zusammenfassend als komplexer Gewichtsvektor w(t) bezeichnet. Die Wichtung kann entweder auf kontinuierliche analoge oder zeitdiskrete digitale Antennenempfangssignale x(t) angewendet werden. Dementsprechend sind die in jedem Empfangssignalpfad vorhandenen Schaltungsmittel für die Wichtung zu realisieren. Die Wichtungen der einzelnen Antennenempfangssignale x(t) können kontinuierlich aber auch nur zu diskreten Zeitpunkten geändert werden. An die Antennenanordnung 5 sind soviele Strahlformungsnetzwerke, von denen in Figur 2 nur eines dargestellt ist, angeschlossen wie das von der Antennenanordnung erfaßbare Gebiet maximal an Fahrzeugen aufnehmen kann, so daß jedem Fahrzeug ein eigenes Richtdiagramm zugeordnet werden kann.

Die von jedem Fahrzeug empfangenen und im zugehörigen Strahlformungsnetzwerk 6 entsprechend gewichteten Empfangssignale werden in einem Summierer 8 einander kohärent überlagert und das Summensignal y(t) einem Empfänger 9 zugeführt.

Die Uplink-Übertragung ist von so kurzer Zeitdauer, daß die Ortsveränderung jedes sich mit der maximal zulässigen Geschwindigkeit bewegenden Fahrzeugs während dieser Zeit kleiner ist als die Ausdehnung des von jeder auf ein Fahrzeug gerichteten Hauptemptangskeule erfaßten Gebietes. Während einer Uplink-Zeitdauer können also die Fahrzeuge als stationär betrachtet werden.

Erst bei einer nächsten Uplink-Übertragung haben sich die Positionen der Fahrzeuge merklich verändert, so daß dann die Richtdiagramme den Ortsveränderungen der Fahrzeuge angepaßt werden müssen. Diese Adaption der Richtdiagramme kann so erfolgen, daß die oben beschriebene Ortsermittlung der Fahrzeuge in entsprechenden Zeitabständen wiederholt wird. Dabei müssen die Zeitabstände so gewählt sein, daß die Ortsermittlung jeweils zu Beginn einer neuen Uplink-Übertragung erfolgt. Zur Erhöhung der Genauigkeit der Ortsermittlung kann diese während einer Uplink-Zeitdauer wiederholt und aus den ermittelten Ortsdaten ein Mittelwert gebildet werden.

Ein anderes Adaptionsverfahren zur Verbesserung der Genauigkeit der Ortsermittlung besteht darin, daß aus dem Ausgangssignal des Empfängers 9 nach einem Gütekriterium Steuersignale für die komplexen Gewichtsvektoren w(t) abgeleitet werden. Und zwar ermittelt, wie Figur 2 zeigt, eine Schaltungseinheit 10 in Verbindung mit dem Prozessor 7 aus dem Empfängerausgangssignal und ggf. den Einzelsignalen der Antennenelemente z.B. das Verhältnis von Nutzsignal zu Störsignalleistung, wobei das Nutzsignal das von demjenigen Fahrzeug empfangene Signal ist, auf das die Hauptempfangskeule gerichtet sein sollte, und Störsignale die von anderen Fahrzeugen empfangene Signale sind, auf welche möglichst stark gedämpfte Bereiche, im Idealfall Nullstellen, des Richtdiagramms gerichtet sein sollten. Der Prozessor 7 leitet aus dem Gütesignal e(t) (Verhältnis von Nutzsignal- zu Störsignalleistung) solche komplexen Gewichtsvektoren w(t) für das Strahlformungsnetzwerk 6 her, daß es zu einer Ausrichtung der Hauptempfangskeule und der stark gedämpften Bereiche (Nullstellen) des Richtdiagramms kommt, welche das Gütesignal e(t) maximal werden läßt.

Es können auch andere Gütekriterien für die Adaption des Strahlungsdiagramms herangezogen werden. Einige bekannte Gütekriterien für Adaptionsverfahren sind in Lehrbüchern von S. Thomas Alexander, Adaptive Signal Processing, Springer-Verlag, 1986 und R.T. Compton, Ir. Adaptive Antennas, Prentice Hall, 1988 beschrieben.

Die dem Prozessor 7 zugeführten komplexen Gewichtsvektoren wₙ(t) stammen von der Antennenanordnung eines Nachbargebietes. Daraus kann der Prozessor Informationen ableiten, wenn ein Fahrzeug von einem Gebiet in das nächste übergewechselt ist (Fahrspurwechsel), und diese entsprechend auf das Strahlformungsnetzwerk 6 übertragen. Weiterhin lassen sich daraus Informationen über die Ausrichtung der Hauptkeulen von Nachbarantennenanordnungen ermitteln, die mit anderen Fahrzeugen Daten austauschen. Der Prozessor 7 kann diese Informationen zur Unterstützung der Ausbildung der Minima bzw. Nullstellen im Richtdiagramm nutzen, um somit den störenden Einfluß der von anderen Fahrzeugen gesendeten Signale zu minimieren.

## Patentansprüche

1. Verfahren zur Datenübertragung zwischen einer Feststation und in einem begrenzten Gebiet sich bewegenden Objekten, wobei die Feststation mindestens eine Antennenanordnung aufweist, welche für jedes der Objekte, mit dem eine Datenübertragung stattfinden soll, ein eigenes Richtdiagramm erzeugt, dadurch gekennzeichnet, daß die Antennenanordnung (5) von allen sich in dem Gebiet befindenden Objekten (1) ausgestrahlte Signale empfängt und aus diesen Empfangssignalen (x(t)) Informationen über den augenblicklichen Ort der einzelnen Objekte (1) abgeleitet werden,
daß die Ortsinformationen dazu verwendet werden, um ein mit der Antennenanordnung (5) verbundenes Strahlformungsnetzwerk (6) so zu steuern, daß die Antennenanordnung (5) für jedes der Objekte (1) ein so geformtes Richtdiagramm erzeugt, daß auf das betreffende Objekt eine Hauptempfangskeule gerichtet ist und in Richtung der jeweils anderen benachbarten Objekte die Empfangsdämpfung gegenüber der Hauptempfangskeule hoch ist,
und daß die Zeitdauer der Datenübertragung von jedem der Objekte (1) zu der Antennenanordnung (5) so kurz ist, daß die Ortsveränderung jedes sich bewegenden Objektes (1) während dieser Zeit kleiner ist als die Ausdehnung des von der auf das Objekt (1) gerichteten Hauptempfangskeule erfaßten Gebietes.

2. Verfahren zur Datenübertragung zwischen einer Feststation und in einem begrenzten Gebiet sich bewegenden Objekten, wobei die Feststation mindestens eine Antennenanordnung aufweist, welche für jedes der Objekte, mit dem eine Datenübertragung stattfinden soll, ein eigenes Richtdiagramm erzeugt, dadurch gekennzeichnet, daß die Antennenanordnung (5) von allen sich in dem Gebiet befindenden Objekten (1) ausgestrahlte Signale empfängt und aus diesen Empfangssignalen (x(t)) erste, noch nicht ausreichend genaue Informationen über den augenblicklichen Ort der einzelnen Objekte (1) abgeleitet werden, daß die Ortsinformationen dazu verwendet werden, um ein mit der Antennenanordnung (5) verbundenes Strahlungsformungsnetzwerk (6) so zu steuern, daß die Antennenanordnung (5) jedem der Objekte (1) sein vorläufiges Richtdiagramm zuordnet,
daß nachdem den einzelnen Objekten (1) ihr vorläufiges Richtdiagramm zugeordnet worden ist, dieses in der Weise angepaßt wird, daß auf jedes Objekt eine Hauptempfangskeule gerichtet ist und in Richtung der jeweils anderen benachbarten Objekte die Empfangsdämpfung gegenüber der Hauptempfangskeule hoch bzw. maximal ist, wobei die dazu erforderlichen Steuersignale für das Strahlformungsnetzwerk (6) nach einem Gütekriterium aus den von der Antennenanordnung (5) empfangenen Signalen (x(t)) abgeleitet werden,
und daß die Zeitdauer der Datenübertragung von jedem der Objekte (1) zu der Antennenanordnung (5) so kurz ist, daß die Ortsveränderung jedes sich bewegenden Objektes (1) während dieser Zeit kleiner ist als die Ausdehnung des von der auf das Objekt (1) gerichteten Hauptempfangskeule erfaßten Gebiets.

3. Verfahren nach Anspruch 2, dadurch gekennzeichnet, daß als Gütekriterium die Maximierung des Verhältnisses von Nutzsignal- zu Störsignalleistung herangezogen wird, wobei das Nutzsignal das von denjenigen Objekten empfangene Signal ist, auf das die Hauptempfangskeule gerichtet sein sollte, und Störsignale die von anderen Objekten empfangene Signale sind, auf welche solche Bereiche des Richtdiagramms gerichtet sein sollten, die gegenüber der Hauptempfangskeule stark gedämpft sind.

4. Verfahren nach Anspruch 1 oder 2, dadurch gekennzeichnet, daß für die Formung und Anpassung der Richtdiagramme auch Ortsinformationen von benachbarten Antennenanordnungen mit einbezogen werden.

5. Anwendung des Verfahrens nach einem der vorhergehenden Ansprüche bei der Gebührenerfassung von Fahrzeugen (1), die sich auf einer ein- oder mehrspurigen Straße (2j fortbewegen, wobei die Fahrzeuge mit einer Einrichtung versehen sind, welche nach einer Aktivierung von außen eine Abbuchung der geforderten Gebühr von einer Scheckkarte veranlaßt und dann ein Quittungssignal aussendet, das von der Antennenanordnung (5) empfangen wird.

## Claims

1. Method for data transmission between a fixed station and objects moving in a delimited area, the fixed station having at least one antenna arrangement which generates a dedicated directional pattern for each of the objects with which data transmission is to be performed, characterized in that the antenna arrangement (5) receives signals radiated from all the objects (1) located in the area and information on the instantaneous location of the individual objects (1) is derived from these received signals (x(t)), in that the location information is used in order to control a beam shaping network (6), connected to the antenna arrangement (5), in such a way that the antenna arrangement (5) generates for each of the objects (1) a directional pattern shaped in such a way that a main receiving lobe is directed onto the relevant object, and the receiving attenuation in the direction of the respective other neighbouring objects is high in comparison with the main receiving lobe, and in that the period of the data transmission of each of the objects (1) to the antenna arrangement (5) is so short that the change in location of each of the moving objects (1) during this time is smaller than the extent of the area covered by the main receiving lobe directed onto the object (1).

2. Method for data transmission between a fixed station and objects moving in a delimited area, the fixed station having at least one antenna arrangement which generates a dedicated directional pattern for each of the objects with which data transmission is to be performed, characterized in that the antenna arrangement (5) receives signals radiated from all the objects (1) located in the area and first information, not yet sufficiently accurate, on the instantaneous location of the individual objects (1) is derived from these received signals (x(t)), in that the location information is used in order to control a beam shaping network (6), connected to the antenna arrangement (5), in such a way that the antenna arrangement (5) assigns each of the objects (1) its provisional directional pattern, in that after the individual objects (1) have been assigned their provisional directional pattern the latter is matched in such a way that a main receiving lobe is directed onto each object and the receiving attenuation in the direction of the respective other neighbouring objects is high or at a maximum in comparison with the main receiving lobe, the control signals, required for this purpose, for the beam shaping network (6) being derived in accordance with a performance index from the signals (x(t)) received by the antenna arrangement (5), and in that the period of the data transmission from each of the objects (1) to the antenna arrangement (5) is so short that the change in location of each of the moving objects (1) during this time is smaller than the extent of the area covered by the main receiving lobe directed onto the object (1).

3. Method according to Claim 2, characterized in that use is made as performance index of the maximization of the ratio of useful signal power to interference signal power, the useful signal being the signal received from that object onto which the main receiving lobe should be directed, and interference signals being the signals received from other objects onto which those regions of the directional pattern should be directed which are strongly attenuated in comparison with the main receiving lobe.

4. Method according to Claim 1 or 2, characterized in that location information from neighbouring antenna arrangements is also included in addition for shaping and matching the directional patterns.

5. Use of the method according to one of the preceding claims in tolled metering of vehicles (1) which are moving on a single-lane or multi-lane road (2), the vehicles being provided with a device which, after being activated from outside, causes the required toll to be deducted from a cheque card, and then emits an acknowledgement signal which is received by the antenna arrangement (5).

## Revendications

1. Procédé servant à la transmission de données entre une station fixe et des objets qui se déplacent dans une zone délimitée, la station fixe présentant au moins une disposition d'antenne, qui produit pour chacun des objets , avec lesquels doit avoir lieu une transmission de données, un diagramme propre d'orientation,
caractérisé en ce que
• la disposition d'antenne (5) reçoit des signaux rayonnés par tous les objets (1), qui se trouvent dans la zone, et prélève à partir de ces signaux de réception (x(t)) des informations instantanément sur l'endroit où se trouve à un moment donné les différents objets (1),
• les informations quant à cet endroit sont utilisées pour commander un réseau en forme d'ondes radio (6), relié à la disposition d'antennes (5), de telle sorte que la disposition d'antennes (5) produise pour chacun des objets (1) un diagramme d'orientation formé d'une façon telle que soit dirigé sur l'objet concerné un lobe de rayonnement de réception principale et que l'atténuation de la réception en direction des autres objets respectivement voisins soit élevée, et
• la durée de la transmission de données de chacun des objets (1) à la disposition d'antennes (5) soit assez courte pour que la variation d'emplacement de chacun des objets (1) en cours de déplacement soit plus petite pendant ce temps que l'étendue de la zone détectée par le lobe de rayonnement de réception principale, dirigé sur l'objet (1).

2. Procédé servant à la transmission de données entre une station fixe et des objets qui se déplacent dans une zone délimitée, la station fixe présentant au moins une disposition d'antenne, qui produit pour chacun des objets, avec lesquels doit avoir lieu une transmission de données, un diagramme propre d'orientation,
caractérisé en ce que
• la disposition d'antenne (5) reçoit des signaux rayonnés par tous les objets (1), qui se trouvent dans la zone, et prélève à partir de ces signaux de réception (x(t)) des premières informations, qui ne sont pas encore suffisamment précises, sur l'emplacement à un instant donné des différents objets (1),
• les informations quant aux emplacements sont utilisées pour commander un réseau en forme d'ondes radio (6) relié à la disposition d'antennes (5), d'une façon telle que la disposition d'antennes (5) associe à chacun des objets (1) son diagramme d'orientation provisoire,
• après que leur diagramme d'orientation provisoire ait été associé aux différents objets (1), celui-ci est adapté d'une manière telle que soit dirigé sur chaque objet un lobe de rayonnement de réception principale et que l'atténuation de la réception en direction des autres objets respectivement voisins soit élevée ou maximale par rapport au lobe de rayonnement de réception principale, les signaux de commande nécessaires pour cela pour le réseau en forme d'ondes radio (6) étant prélevés selon un critère de qualité à partir des signaux (x(t)), reçus de la disposition d'antennes (5),
• la durée de la transmission des données par chacun des objets (1) à la disposition d'antennes (5) est assez courte pour que la variation d'emplacement de chacun des objets (1) en cours de déplacement soit pendant ce temps plus petite que l'étendue de la zone détectée par le lobe de rayonnement de réception principale dirigé sur l'objet (1).

3. Procédé selon la revendication 2,
caractérisé en ce qu'
on utilise comme critère de qualité la maximalisation du rapport de la puissance du signal utile à la puissance des signaux parasites, le signal utile étant le signal reçu par les objets sur lesquels doit être dirigé le lobe de réception principale, et les signaux parasites étant les signaux reçus des autres objets, sur lesquels doivent être dirigées des zones qui soient fortement atténuées par rapport au lobe de rayonnement principal de réception.

4. Procédé selon la revendication 1 ou 2,
caractérisé en ce que
pour la mise en forme et l'adaptation des diagrammes d'orientation on utilise aussi en même temps des informations quant aux emplacements des dispositions d'antennes voisines.

5. Utilisation du procédé selon l'une des revendications précédentes lors de la détermination des péages de véhicules (1), qui avancent sur une chaussée (2) à une ou plusieurs voies, les véhicules étant pourvus d'un système, qui provoque après une activation de l'extérieur un prélèvement de la taxe requise à partie d'une carte de paiement et ensuite émet un signal de quittance, qui est reçu par la disposition d'antennes (5).
